# EUROPEAN PATENT APPLICATION

(11) **EP 4 046 948 A1**
(43) Date of publication of application: **24.08.2022**
(21) Application number: 22156248.1
(22) Date of filing: 11.02.2022
(51) Int. Cl.: B65G 69/00, F16C 29/00

(54) **GUIDE AND CARRIAGE FOR APPLICATION WITH A DEVICE FOR THE BLOCKING OF THE WHEEL OF A TRUCK ON A LANE IN FRONT OF A LOADING AND UNLOADING PLATFORM**

(30) Priority: 18.02.2021 NL 2027581
(71) Applicant: Hörmann Alkmaar BV, 1822 BB Alkmaar (NL)
(72) Inventor: Wolkers, Frank, 1721 HE Broek op Langedijk (NL); Blom, Robbert, 1738 CK Waarland (NL); Koopman, Arie, 1771 RW Wieringerwerf (NL)
(74) Representative: Koomen, M.J.I.

(57) **Abstract**

Guide (6) extending from a road side to a façade side, and a carriage (10) provided with a locking arm (9) with rolls (11) or such like, by means of which the carriage (10) is movable along one or more tracks provided on the guide (6), for application with a device for the blocking of the wheel of a truck on a lane in front of a loading and unloading platform, characterized in that the carriage (10), as seen from the roadside towards the façade side, comprises a left carriage housing part (12) and a right carriage housing part (13), and whereby the guide (6), as seen from the road side towards the façade side comprises a left guide housing part (14) and a right guide housing part (15), and whereby the left carriage housing part (12) at least partly is taken up within the left guide housing part (14) or is enclosed thereby and/or whereby the right carriage housing part (13) at least partly is taken up within the right guide housing part (15) or is enclosed thereby.

## Description

Guide and carriage for application with a device for the blocking of the wheel of a truck on a lane in front of a loading and unloading platform.

The present invention relates to guide extending from a road side to a façade side, and a carriage provided with a locking arm with rolls or such like, by means of which the carriage is movable along one or more lines provided on the guide, for application with a device for the blocking of the wheel of a truck on a lane in front of a loading and unloading platform.

Such a guide and carriage are known.

The European application EP-A- 3 028 966 describes a guide and carriage that is formed such that the guide on the top and sides more or less is enclosed by the housing of the carriage.

The American application US 2011/0162916 A1 describes a guide formed by a support beam placed on legs. On the support beam a flat top plate is welded. By means of rolls the carriage rests on the flat top plate and with rolls underneath the top plate that lie against the support beam. Also with this guide and carriage the guide on the top and sides is more or less enclosed by the housing of the carriage.

The American application US 2010/0170754 A describes a guide with two parallel U-sections the flanges of which are turned away from each other, and whereby the carriage via the guide rides on rolls that are taken up within the flanges of the U-sections.

The present invention aims to provide an improved guide and carriage.

The guide and carriage for application with a device for the blocking of the wheel of a truck on a lane in front of a loading and unloading platform thereto is characterized, in that the carriage, as seen from the roadside towards the façade side, comprises a left carriage housing part and a right carriage housing part, and whereby the guide, as seen from the road side towards the façade side, comprises a left guide housing part and a right guide housing part, and whereby the left carriage housing part at least partly is taken up within the left guide housing part or is enclosed thereby and/or whereby the right carriage housing part at least partly is taken up within the right guide housing part or is enclosed thereby.

According to a characteristic of the guide and carriage according to the invention, the left carriage housing part has an outer side having a shape, and the left guide housing part has an inner side having a shape, that are adapted to each other, such, that the left carriage housing part is taken up more or less fitting or with some interspace within the left guide housing part or is thereby enclosed.

According to a further characteristic of the guide and carriage according to the invention the right carriage housing part has an outer side having a shape, and the right guide housing part has an inner side having a shape, that are adapted to each other, such that the right carriage housing part is taken up more or less fitting or with some interspace within the right guide housing part or is thereby enclosed.

According to another characteristic of the guide and carriage according to the invention the left guide housing part is provided with a path or track and the left carriage housing part is provided with one or more rolls, and by means of which the carriage is movable over the guide, and/or whereby the right guide housing part is provided with a path or track and the right carriage housing part is provided with one or more rolls, and by means of which the carriage is movable over the guide.

According to a further characteristic of the guide and carriage according to the invention a track is formed on the upper side of a lower part of the left guide housing part and/or a track is formed on the upper side of a lower part of the right guide housing part, and over which the rolls move and by which the carriage is movable over the guide.

According to a further characteristic of the guide and carriage according to the invention, a guide housing part or both the guide housing parts have the shape of a lying U-section, the legs of which are directed towards the middle of the carriage, while according to another characteristic, a carriage housing part or both the carriage housing parts have the shape substantially of a lying U-section, the legs of which are directed towards the middle of the carriage.

Further characteristics and particulars of the guide and carriage according to the invention will be explained with reference to the drawings of an example of an embodiment.
Figure 1 shows a perspective view of a loading and unloading platform with shown thereon two lanes with a guide and carriage according to the invention.
Figure 2 shows a perspective view of an example of an embodiment of a guide and carriage according to the invention.
Figure 3 shows a perspective view of a carriage according to the invention.
Figure 4 shows a perspective view of a part of a guide according to the invention.
Figure 5 shows, as seen from the road side towards the façade side, a front view in cross section of a part of a guide with carriage according to the invention.
Figure 6 shows a perspective bottom view of a carriage according to the invention.
Figure 7 shows, as seen from the road side towards the façade side, a front view in cross section of a part of a carriage according to the invention.
Figure 8 shows, as seen from the road side towards the façade side, a front view of the carriage on the guide.

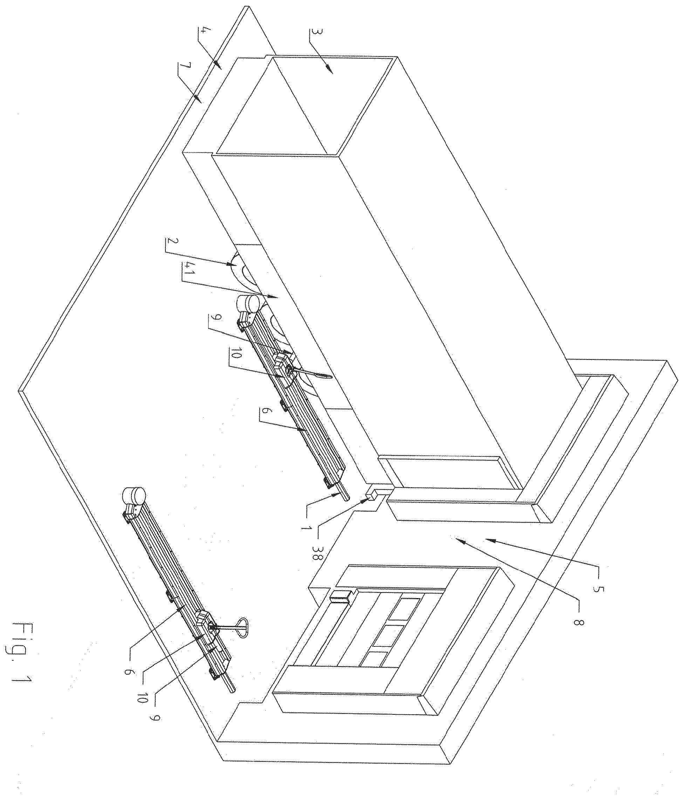

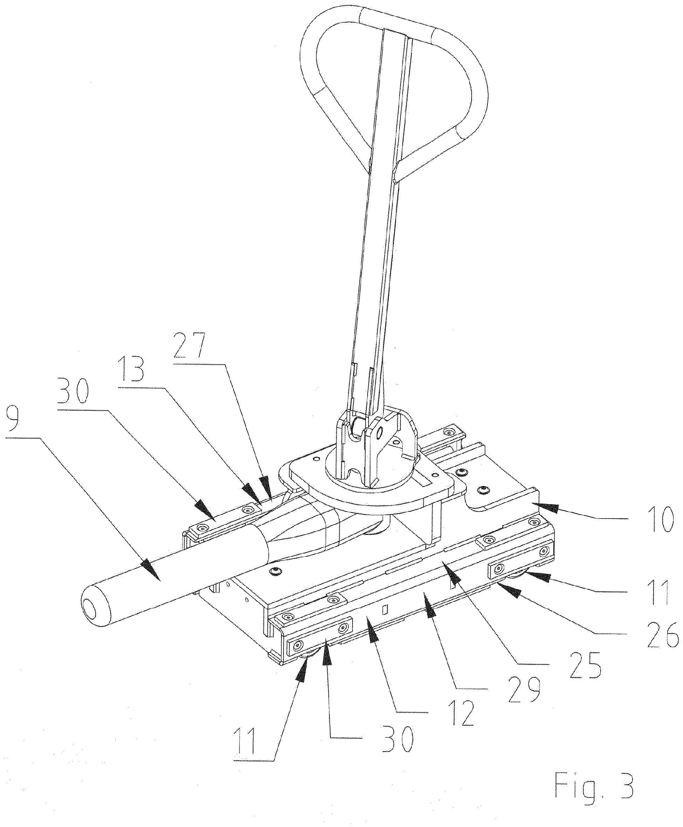

In figure 1 is shown a device 1 for the blocking of the wheel 2 of a truck 3 with a rear beam 38 on a lane 4 in front of a loading and unloading platform 5. There are shown two guides 6 extending from the road side 7 to the façade side 8. On each guide 6 there is shown a carriage 10 that is provided with a locking arm 9. As shown in the figures 3, 5 and 6 the carriage is provided with rolls 11.

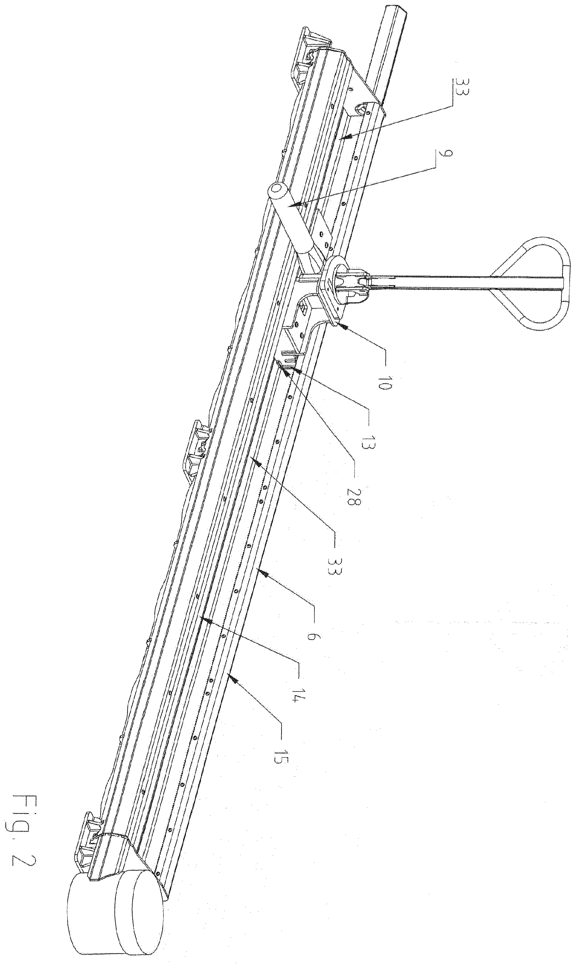

As can be seen in the figures 3, 5 and 6 the carriage 10 comprises, as seen from the road side 7 towards the façade side 8, a left carriage housing part 12 and a right carriage housing part 13. As can be seen in the figures 2, 4 and 5 the guide 6, as seen from the road side 7 towards the façade side 8, comprises a left guide housing part 14 and a right guide housing part 15. In the example of an embodiment shown both the guide housing parts 14, 15 have the shape of a lying U-section 16, 17, whereby the legs 18, 19 of the left guide housing part 14 and the legs 20, 21 of the right guide housing part 15 are directed towards the middle 22 of the carriage.

Further, in the example of an embodiment shown both the carriage housing parts 12, 13 also have the shape of a lying U-section 23, 24, whereby the legs 25, 26 of the left carriage housing part 12 and the legs 27, 28 of the right carriage housing part 13 are directed towards the middle 22 of the carriage.

As can be seen the distance between the legs 18, 19 of the left guide housing part 14 is larger than that between the legs 25, 26 of the left carriage housing part 12, and the distance between the legs 20, 21 of the right guide housing part 15 is larger than that between the legs 27, 28 of the right carriage housing part 13.

As can be seen in the figures the left carriage housing part 12 with the legs 25, 26 is substantially taken up within the legs 18, 19 of the left guide housing part 14 or is thereby enclosed. In the same way the right carriage housing part 13 with the legs 27, 28 is substantially taken up within the legs 20, 21 of the left guide housing part 15.

Instead of an U-section shape the carriage housing parts and the guide housing parts self-evidently may also have another shape. Important is that the shapes of the parts are more or less the same, such that the carriage housing parts can be taken up more or less fitting, or with some interspace, within the guide housing parts.

As can be seen in the figures 3, 5 and 6 the carriage housing parts 12, 13 at the outer side 29 are provided with sliding strips in the shape of strips of material 30. By means of this a carriage housing part 12, 13 can rest against the inner side 31 of a guide housing part 14, 15 or can slide or glide there along, as will be explained hereafter.

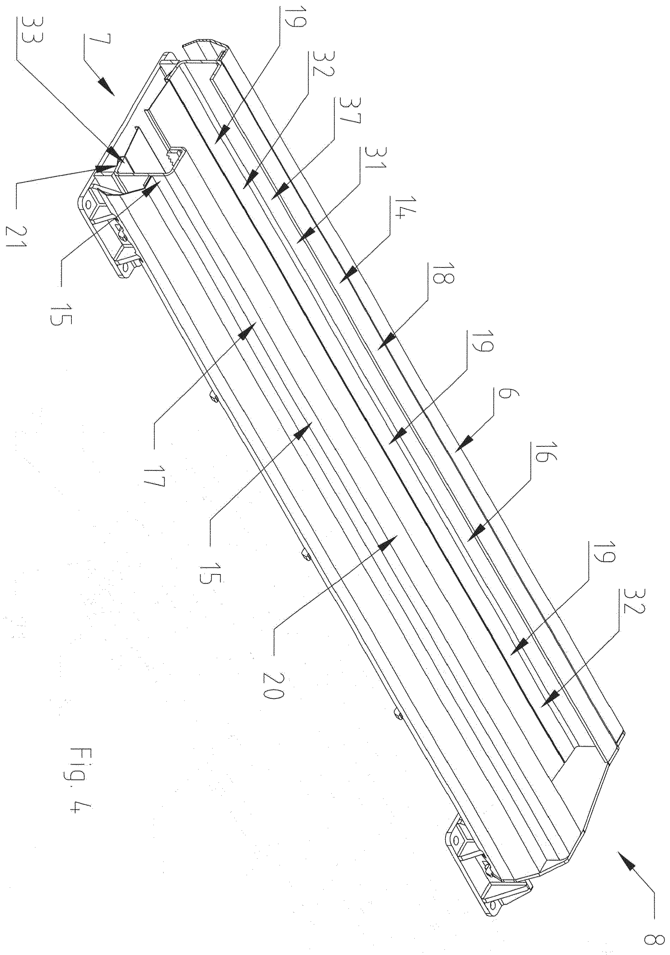

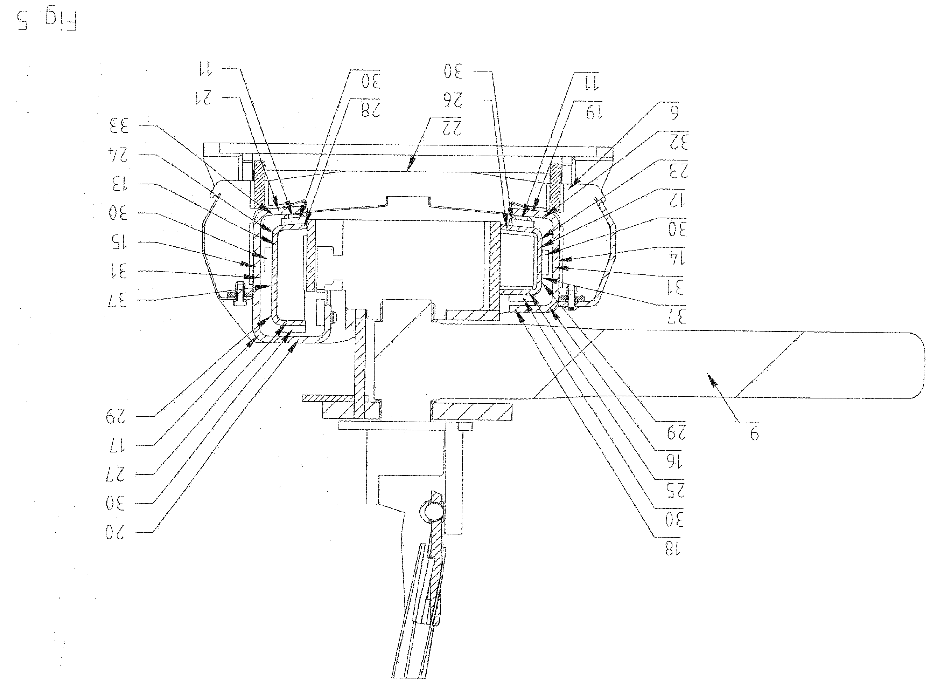

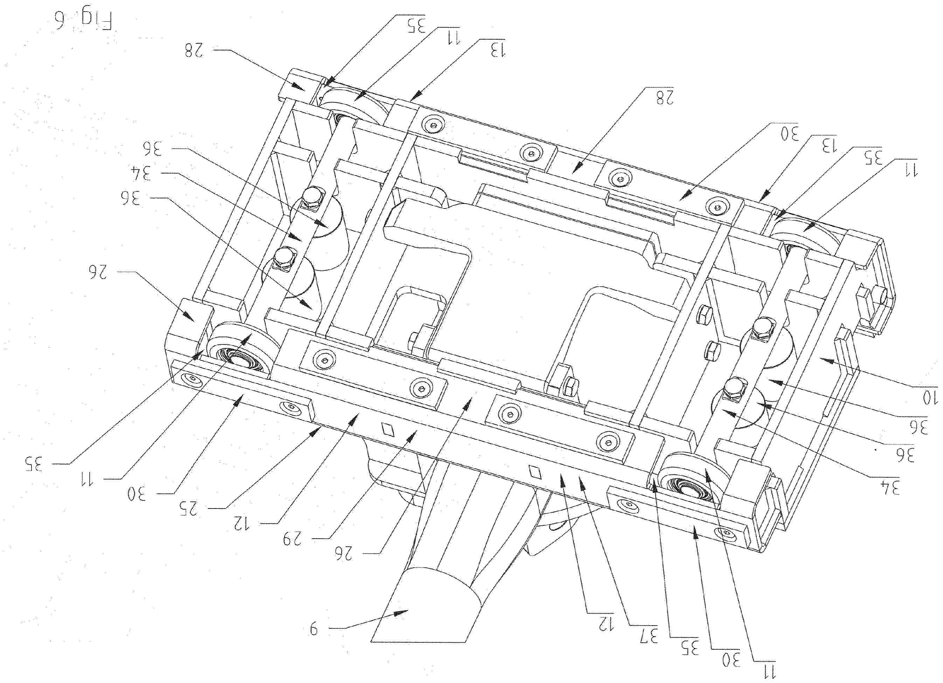

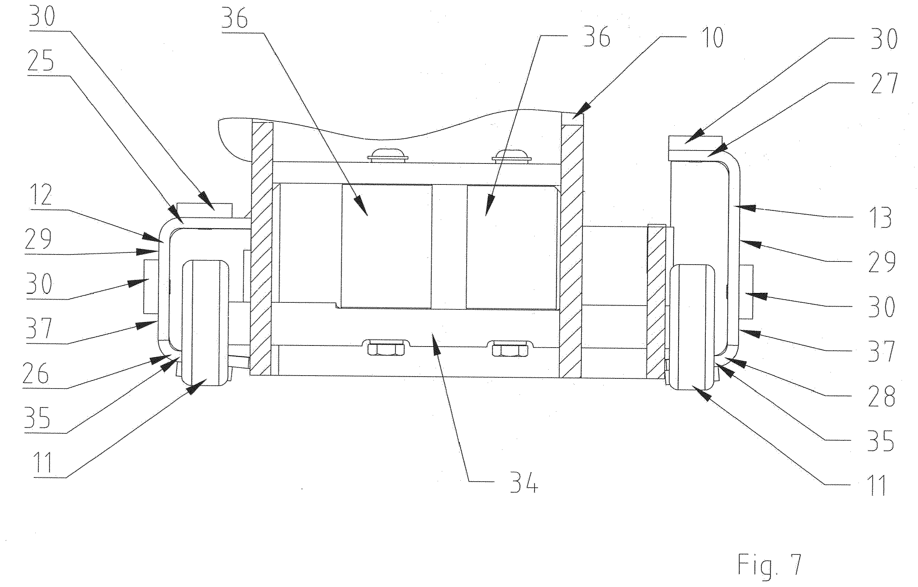

As can be seen in figure 4 and 5, the lower legs 19, 21 of the guide housing parts 14, 15 are provided with a path or track 32, 33. In the figures 6 and 7 it can be seen that the carriage 10 is provided with two axles 34, at both the outer ends of which the rolls 11 are provided. As can be seen in figure 5, the rolls 11 make contact with the track 32, 33 through openings 35 that are provided in the lower legs 26, 28 of the carriage housing parts 12, 13. In this way the carriage 10 with the rolls 11 moves over the tracks 32, 33 along the guide 6.

As can further be seen in figure 7, the axles 34 are mounted to the carriage 10 by means of a spring construction 36. The spring construction 36 is designed such, that this carries the self-weight of the carriage 10, at minimal compression. When the locking arm 9 is loaded by the truck 3, and thereby the carriage 10 is loaded, the axle 34 springs in, and the rolls 11 can move upwards through the openings 35 in the lower legs 26, 28, or the carriage downwards, see figure 5 and figure 6. Thereby the carriage 10 can directly, without further loading or overloading of the rolls 11, be pushed downwards by the force exerted by the tire 2 of the truck 3 onto the locking arm 9 and onto the carriage 10. Under the pressure of the locking arm 9 the carriage housing parts 12, 13 can lean against the inner side 31 (figure 5) of the guide housing parts 14, 15 without the rolls 11 being further loaded or overloaded.

In order to still be able, when unlocking the carriage under a high load, when the rolls have sprung in, to slide the carriage, the carriage housing parts 12, 13 at the outer side 29 are provided with sliding strips 30 in the form of strips of material applied to among other the upper legs 25, 27, the lower legs 26, 28 and the backs 37. These sliding strips 30 can transfer all the forces of the carriage to the guide 6. By means of this the unlocking of the locking system under high pressure is guaranteed.

As can be seen in figure 5 the lower legs 19, 21 of the guide housing parts 14, 15 extend inclined downwards in the direction towards the middle 22 of the carriage. By this it is achieved that rainwater can run out of the guide to waste. The legs of the guide housing parts 14, 15 can be provided with openings through which dirt can be removed.

Present safety and environmental regulations demand with regard to the bodywork and the rear beam of trucks that these are positioned at less height from the road surface. Like this for instance the aerodynamic side cover 41, that covers also a part of the wheels, as shown in figure 1. The guide and the carriage according to the invention are adapted to this.

The locking arm 9 has been mounted relatively low to the truck 10. As, because of this, the locking arm 9 contacts the wheel 2 of the truck at a lower point, the locking arm suffers a larger load by this wheel. With the guide and carriage according to the invention this load can be met optimally.

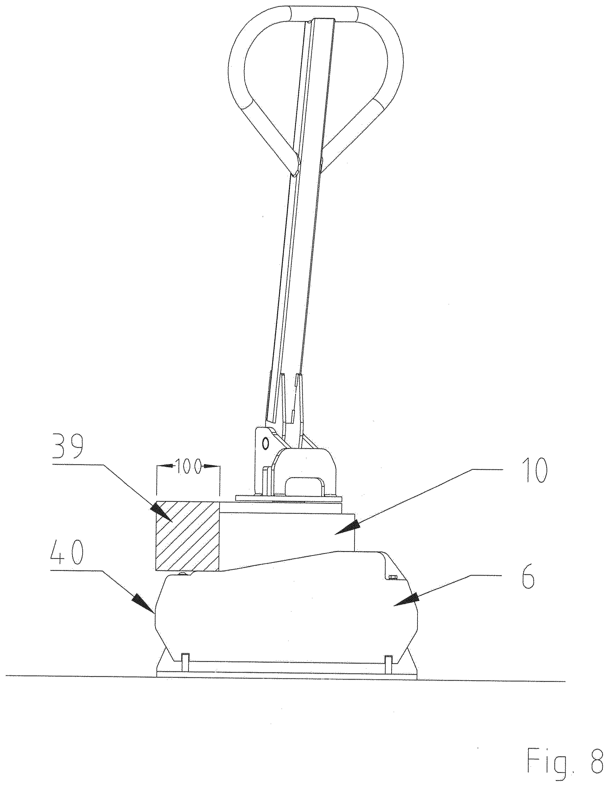

In figure 2 and in figure 8 is shown the carriage 10 on the guide 6. The guide 6, at the side along which the truck 3 drives in and out (in the example of an embodiment shown that is, as seen from the roadside 7 towards the façade side 8, the left side), is designed as a low profile, as a result of which no conflict with the rear beam 38 of the truck 3 that is driving in and out occurs (see also figure 4). Further, the carriage has been formed such, see figure 8, that if the locking arm is in the not-locking position, there is a free space 39 or zone between the plane of the wheel guide profile 40, extending parallel to the lane, and the part of the truck 3 standing nearest the lane which protrudes above the guide 6. Also by this the chance of a conflict of the carriage with the rear beam 38 of the truck that is driving in and out is minimized.

## Claims

1. Guide extending from a road side to a façade side, and a carriage provided with a locking arm with rolls or such like, by means of which the carriage is movable along one or more paths or tracks provided on the guide, for application with a device for the blocking of the wheel of a truck on a lane in front of a loading and unloading platform, **characterized in that** the carriage, as seen from the roadside towards the façade side, comprises a left carriage housing part and a right carriage housing part, and whereby the guide, as seen from the road side towards the façade side comprises a left guide housing part and a right guide housing part, and whereby the left carriage housing part at least partly is taken up within the left guide housing part or is enclosed thereby and/or whereby the right carriage housing part at least partly is taken up within the right guide housing part or is enclosed thereby.

2. Guide and carriage according to claim 1, **characterized in that** the left carriage housing part has an outer side having a shape, and the left guide housing part has an inner side having a shape, that are adapted to each other, such the left carriage housing part is taken up more or less fitting or with some interspace within the left guide housing part or is thereby enclosed.

3. Guide and carriage according to claim 1 or 2, **characterized in that** the right carriage housing part has an outer side having a shape, and the right guide housing part has an inner side having a shape, that are adapted to each other, such the right carriage housing part is taken up more or less fitting or with some interspace within the right guide housing part or is thereby enclosed.

4. Guide and carriage according to one of the preceding claims, **characterized in that** the left guide housing part is provided with a track and the left carriage housing part is provided with one or more rolls, and by means of which the carriage is movable over the guide, and/or whereby the right guide housing part is provided with a track and the right carriage housing part is provided with one or more rolls, and by means of which the carriage is movable over the guide.

5. Guide and carriage according to claim 4, **characterized in that** a track is formed on the upper side of a lower part of the left guide housing part and/or a track is formed on the upper side of a lower part of the right guide housing part.

6. Guide and carriage according to claim 5, **characterized in that** the upper side of the lower part of one or that of both guide housing parts, as seen in the direction towards the middle of the carriage, has a downwards inclined path.

7. Guide and carriage according to one of the preceding claims, **characterized in that** a guide housing part or both the guide housing parts have the shape substantially of a lying U-section, the legs of which are directed towards the middle of the carriage.

8. Guide and carriage according to one of the preceding claims, **characterized in that** a carriage housing part or both the carriage housing parts have the shape substantially of a lying U-section, the legs of which are directed towards the middle of the carriage.

9. Guide and carriage according to claim 8, **characterized in that** the distance between the legs of the left guide housing part is larger than that between the legs of the left carriage housing part.

10. Guide and carriage according to claim 8 or 9, **characterized in that** the distance between the legs of the right guide housing part is larger than that between the legs of the right carriage housing part.

11. Guide and carriage according to one of the claims 7 and following, **characterized in that** a track is formed on the upper positioned surface of the lower leg of a guide housing part or the guide housing parts.

12. Guide and carriage according to claim 11, **characterized in that** the rolls are in contact with the track or the tracks through openings that are provided in the lower leg of the carriage housing part or the carriage housing parts.

13. Guide and carriage according to claim 8, 9, 10 or 11, **characterized in that** the lower leg of a guide housing part or the guide housing has a path that is inclined downwards in the direction towards the middle of the carriage.

14. Guide and carriage according to one of the preceding claims, **characterized in that** the rolls are provided to the carriage springy.

15. Guide and carriage according to one of the preceding claims, **characterized in that** the carriage is provided with two or more axles, at both the outer ends of which the rolls are provided, whereby the axles are mounted to the carriage by means of a spring construction, such, that when the carriage is loaded, the axle with the rolls is movable upwards relative to the carriage against spring force.

16. Guide and carriage according to one of the preceding claims, **characterized in that** a carriage housing part or the carriage housing parts at the outer side is or are provided with one or more strips of material, by means of which the carriage housing part can rest against the inner side of a guide housing part or there along can glide or slide.
